# EUROPEAN PATENT APPLICATION

(11) **EP 4 329 024 A1**
(43) Date of publication of application: **28.02.2024**
(21) Application number: 21937879.1
(22) Date of filing: 21.04.2021
(51) Int. Cl.: H01M 10/04, H01M 10/0585, H01M 50/105, H01M 50/30

(54) **METHOD FOR PRODUCING ELECTROCHEMICAL CELL**

(71) Applicant: Kyocera Corporation, Kyoto-shi Kyoto 612-8501 (JP)
(72) Inventor: UTO Yasuyuki, Kyoto-shi, Kyoto 612-8501 (JP); MISHIMA Hiromitsu, Kyoto-shi, Kyoto 612-8501 (JP)
(74) Representative: TBK
(86) International application number: PCT/JP2021/016215
(87) International publication number: WO 2022/224385

(57) **Abstract**

A method for manufacturing an electrochemical cell includes: a process A of manufacturing a first structure (110) by stacking a first film (111), a first current collector (112), and a first electrode (113); a process B of manufacturing a second structure (120) by stacking a second film (121), a second current collector (122), and a second electrode (123); a process C of disposing a separator (130) between the first structure and the second structure; and a process D of manufacturing a unit cell (100) by sealing an outer periphery of the first film and an outer periphery of the second film outside the first electrode and the second electrode, respectively, while leaving a first non-sealing region (105A) in at least part of the outer periphery of the first film.

## Description

### TECHNICAL FIELD

The present invention relates to a method for manufacturing an electrochemical cell.

### BACKGROUND OF INVENTION

A proposed electrochemical cell uses a semisolid electrode. The electrochemical cell has a structure in which a separator is sandwiched between a first structure and a second structure. The first structure has a structure with a first current collector and a first electrode stacked, and the second structure has a structure with a second current collector and a second electrode stacked. The first electrode is one of a positive electrode and a negative electrode, and the second electrode is the other of the positive electrode and the negative electrode.

For such an electrochemical cell, a proposed technique covers the first structure, the second structure, and the separator with a package having a hole for releasing a gas that can be generated in electrodes such as the first electrode and the second electrode (e.g., Patent Document 1).

### CITATION LIST

### PATENT LITERATURE

Patent Document 1: WO 2019/087956 pamphlet

### SUMMARY

A method for manufacturing an electrochemical cell according to one aspect of the disclosure includes: a process A of manufacturing a first structure by stacking a first film, a first current collector, and a first electrode; a process B of manufacturing a second structure by stacking a second film, a second current collector, and a second electrode; a process C of disposing a separator between the first structure and the second structure; and a process D of manufacturing a unit cell by sealing an outer periphery of the first film and an outer periphery of the second film outside the first electrode and the second electrode, respectively, while leaving a first non-sealing region in at least part of the outer periphery of the first film.

### BRIEF DESCRIPTION OF THE DRAWINGS

FIG. 1 is a view illustrating a unit cell 100 according to an embodiment.
FIG. 2 is a view illustrating the unit cell 100 according to an embodiment.
FIG. 3 is a view illustrating the unit cell 100 according to an embodiment.
FIG. 4 is a view illustrating a stack cell 200 according to an embodiment.
FIG. 5 is a view for describing a method for manufacturing the unit cell 100 according to an embodiment.
FIG. 6 is a view for describing the method for manufacturing the unit cell 100 according to an embodiment.
FIG. 7 is a view for describing the method for manufacturing the unit cell 100 according to an embodiment.
FIG. 8 is a view for describing the method for manufacturing the unit cell 100 according to an embodiment.
FIG. 9 is a view for describing the method for manufacturing the unit cell 100 according to an embodiment.
FIG. 10 is a view for describing a method for manufacturing the stack cell 200 according to an embodiment.
FIG. 11 is a view for describing the method for manufacturing the stack cell 200 according to an embodiment.
FIG. 12 is a view for describing a summary of the manufacturing method according to an embodiment.

### DESCRIPTION OF EMBODIMENTS

Embodiments will be described below with reference to the accompanying drawings. Note that in the following description of the drawings, the same or similar components will be denoted by the same or similar reference signs. However, the drawings are schematic.

### Embodiment

### Unit Cell

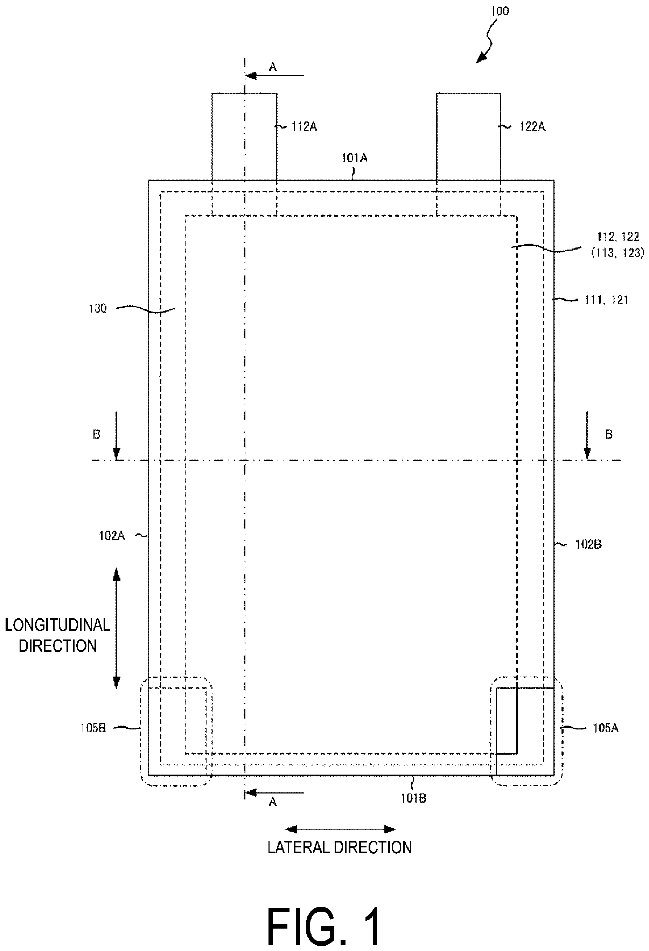

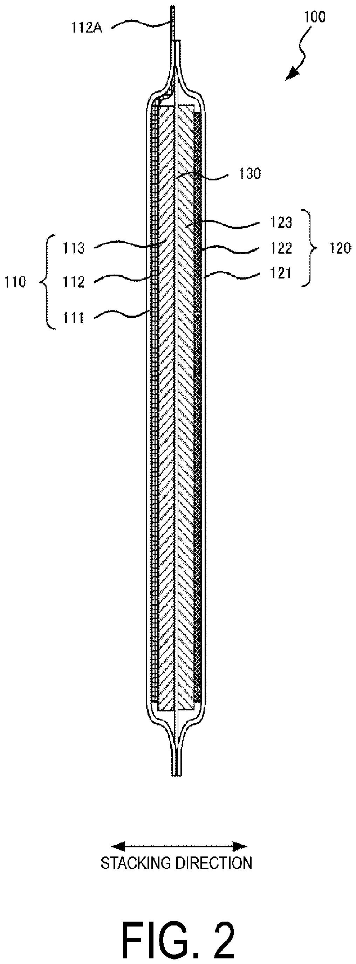

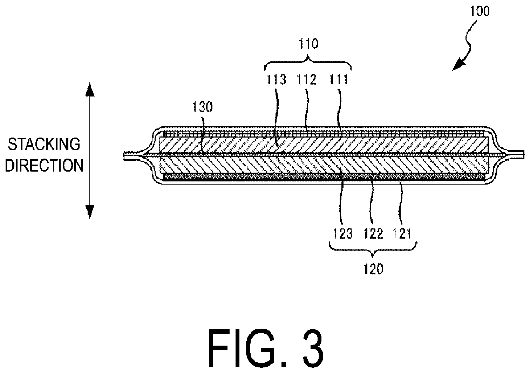

Hereinafter, a unit cell according to an embodiment will be described with reference to FIGs. 1 to 3. FIG. 1 is a plan view seen along a stacking direction (hereinafter, simply in a plan view) of the unit cell 100. FIG. 2 is a view illustrating an A-A cross section of the unit cell 100 illustrated in FIG. 1. FIG. 3 is a view illustrating a B-B- cross section of the unit cell 100 illustrated in FIG. 1. The unit cell 100 is an example of an electrochemical cell. Hereinafter, the direction in which a positive electrode structure 110, a separator 130, and a negative electrode structure 120 are stacked is referred to as a "stacking direction".

As illustrated in FIGs. 1 to 3, the unit cell 100 may have a rectangular shape in a plan view. In other words, the unit cell 100 may have a pair of lateral sides 101A and 101B along the lateral direction and a pair of longitudinal sides 102A and 102B along the longitudinal direction. The unit cell 100 includes the positive electrode structure 110, the negative electrode structure 120, and the separator 130.

The positive electrode structure 110 includes a positive electrode film 111, a positive electrode current collector 112, and a positive electrode 113. The positive electrode structure 110 is a stack body of the positive electrode film 111, the positive electrode current collector 112, and the positive electrode 113. In the embodiment, the positive electrode structure 110 is an example of a first structure.

The positive electrode film 111 is made of a material having insulating properties and air impermeability. In the embodiment, the positive electrode film 111 is an example of a first film. The positive electrode film 111 has a sheet shape. The positive electrode film 111 may have a multilayer structure made of two or more layers (e.g., three layers). For example, the positive electrode film 111 may include an outer layer exposed to the outside of the unit cell 100, an inner layer exposed to the inside of the unit cell 100, and an intermediate layer disposed between the outer layer and the inner layer.

The outer layer may be made of an insulating material. For example, the insulating material constituting the outer layer can use a polymer film made of at least one or more materials selected from the group consisting of polyethylene terephthalate (PET), polybutylene terephthalate (PBT), nylon, high purity polyethylene (HDPE), oriented polypropylene (o-PP), polyvinyl chloride (PVC), polyimide (PI), and polysulfone (PSU). The outer layer may be coated with flame-retardant PET.

The intermediate layer may be made of a metal material. The metal material constituting the intermediate layer can use a layer (a foil, a substrate, a film, or the like) made of one or more materials selected from the group consisting of aluminum (Al), copper (Cu), and stainless steel (SUS).

The inner layer may be made of an insulating material. The insulating material constituting the inner layer can use a polymer film made of one or more materials selected from the group consisting of cast polypropylene (c-PP), polyethylene (PE), ethylene vinyl acetate (EVA), polyethylene terephthalate (PET), polyvinyl acetate (PVA), polyamide (PA), tacky acrylic, an ultraviolet (UV) curable resin, an electron beam (EB) curable resin, and an infrared (IR) curable resin.

The inner layer may be made of a flame-retardant material. The flame-retardant material constituting the inner layer can use one or more materials selected from the group consisting of polyether ether ketone (PEEK), polyethylene naphthalene (PEN), polyether sulfone (PES), polyimide (PI), polyethylene sulfide (PPS), and polyethylene oxide (PPO).

The case where the positive electrode film 111 has a three-layer structure has been described here, but the embodiment is not limited to this. The positive electrode film 111 may have a two-layer structure or a single-layer structure. The positive electrode film 111 may contain a combustion inhibiting substance.

The positive electrode current collector 112 has a function of transferring electrons to and from the positive electrode 113. In the embodiment, the positive electrode current collector 112 is an example of a first current collector. The positive electrode current collector 112 is disposed between the positive electrode film 111 and the positive electrode 113. The positive electrode current collector 112 may have a sheet shape or may have a mesh shape. The thickness of the positive electrode current collector 112 may be 1 to 40 µm.

The positive electrode current collector 112 is made of a metal material. The metal material constituting the positive electrode current collector 112 can use one or more materials selected from the group consisting of stainless steel, nickel, a nickel-chromium alloy, aluminum, titanium, copper, lead, a lead alloy, a heat-resistant metal, and a noble metal. The positive electrode current collector 112 may be coated with a conductive material. The conductive material can use one or more materials selected from the group consisting of a metal, a metal oxide, and carbon. The metal can use one or more materials selected from the group consisting of platinum (Pt), gold (Au), and nickel (Ni). The metal oxide can use vanadium oxide.

In the embodiment, the positive electrode current collector 112 may include a positive electrode terminal 112A. The positive electrode terminal 112A may extend outward the positive electrode film 111 in a plan view. The positive electrode terminal 112A may extend outward the positive electrode film 111 at the lateral side 101A. The positive electrode terminal 112A may be formed integrally with the positive electrode current collector 112. The positive electrode 113 may be stacked on at least part of the positive electrode terminal 112A. In an aspect in which two or more of the unit cells 100 are stacked (the stack cell 200 described later), the positive electrode terminal 112A is electrically connected to the positive electrode terminal 112A of another unit cell 100 (parallel connection).

The positive electrode 113 is electrically connected to the positive electrode current collector 112. In the embodiment, the positive electrode is an example of a first electrode. The positive electrode 113 receives electrons from the positive electrode current collector 112 in the discharge operation and emits electrons to the positive electrode current collector 112 in the charge operation. The positive electrode 113 is an electrochemically active semisolid. In other words, the positive electrode 113 is a mixture of a positive electrode active material and an electrolytic solution. The positive electrode 113 may be a mixture of a liquid phase and a solid phase such as a clay-like slurry, a particulate suspension, a colloidal suspension, an emulsion, a gel, or a micelle. The positive electrode 113 is disposed between the positive electrode current collector 112 and the separator 130. The positive electrode 113 has a layer shape. The thickness of the positive electrode may be 250 to 2000 µm.

The positive electrode 113 may contain, as a positive electrode active material, a nickel-cobalt-aluminum-based lithium composite oxide (NCA), a spinel-based lithium manganese oxide (LMO), a lithium iron phosphate (LFP), a lithium cobalt oxide (LCO), a nickel-cobalt-manganese-based lithium composite oxide (NCM), or the like. The positive electrode 113 may contain, as a positive electrode active material, a solid-state compound known to those skilled in the art, for example, used in a nickel-hydrogen battery, a nickel-cadmium battery, or the like. The positive electrode 113 may contain, as a positive electrode active material, LiCoO₂ or LiNiO₂ doped with Mg, for example.

The negative electrode structure 120 includes a negative electrode film 121, a negative electrode current collector 122, and a negative electrode 123. The negative electrode structure 120 is a stack body of the negative electrode film 121, the negative electrode current collector 122, and the negative electrode 123. In the embodiment, the negative electrode structure 120 is an example of a second structure.

The negative electrode film 121 is made of a material having insulating properties and air impermeability. In the embodiment, the negative electrode film 121 is an example of a second film. The negative electrode film 121 has a sheet shape. The negative electrode film 121 may have a multilayer structure made of two or more layers (e.g., three layers). The configuration of the negative electrode film 121 may be same as, and/or similar to, that of the positive electrode film 111, and the details of the negative electrode film 121 are omitted.

The negative electrode current collector 122 has a function of transferring electrons to and from the negative electrode 123. In the embodiment, the negative electrode current collector 122 is an example of a second current collector. The negative electrode current collector 122 is disposed between the negative electrode film 121 and the negative electrode 123. The negative electrode current collector 122 may have a sheet shape or may have a mesh shape. The thickness of the negative electrode current collector 122 may be 1 to 20 µm.

The negative electrode current collector 122 is made of a metal material. The metal material constituting the negative electrode current collector 122 can use one or more materials selected from the group consisting of stainless steel, nickel, a nickel-chromium alloy, titanium, lead oxide, and a noble metal. The negative electrode current collector 122 may be coated with a conductive material. As the conductive material,

In the embodiment, the negative electrode current collector 122 may include a negative electrode terminal 122A. The negative electrode terminal 122A may extend outward the negative electrode film 121 in a plan view. The negative electrode terminal 122A may extend outward the negative electrode film 121 at the lateral side 101A. The negative electrode terminal 122A may be formed integrally with the negative electrode current collector 122. The negative electrode 123 may be stacked on at least part of the negative electrode terminal 122A. In an aspect in which the two or more unit cells 100 are stacked (the stack cell 200 described later), the negative electrode terminal 122A is electrically connected to the negative electrode terminal 122A of another unit cell 100 (parallel connection).

The negative electrode 123 is electrically connected to the negative electrode current collector 122. In the embodiment, the negative electrode 123 is an example of a second electrode. The negative electrode 123 emits electrons from the negative electrode current collector 122 in the discharge operation and receives electrons from the negative electrode current collector 122 in the charge operation. The negative electrode 123 is an electrochemically active semisolid. In other words, the negative electrode 123 is a mixture of a negative electrode active material and an electrolytic solution. The negative electrode 123 may be a mixture of a liquid phase and a solid phase such as a clay-like slurry, a particulate suspension, a colloidal suspension, an emulsion, a gel, or a micelle. The negative electrode 123 is disposed between the negative electrode current collector 122 and the separator 130. The negative electrode 123 has a layer shape. The thickness of the positive electrode may be 250 to 2000 µm.

The negative electrode 123 may contain, as a negative electrode active material, a carbon-based material such as graphite, hard carbon, soft carbon, a carbon nanotube, graphene, or the like. The negative electrode 123 may contain, for example, a titanium-based oxide such as lithium titanate or titanium dioxide. The negative electrode 123 may contain, for example, a transition metal compound containing iron, cobalt, copper, manganese, nickel, or the like.

The positive electrode 113 and the negative electrode 123 may contain an electrolytic solution. The electrolytic solution may be a carbonate-based solvent. The carbonate-based solvent may be γ-butyrolactone, ethylene carbonate, or both γ-butyrolactone and ethylene carbonate. The carbonate-based solvent may contain another solvent as long as it contains at least one of γ-butyrolactone and ethylene carbonate. Examples of other solvents include propylene carbonate, dimethyl carbonate, dimethoxyethane, diethyl carbonate, tetrahydrofuran, and triethylene glycol dimethyl ether. When γ-butyrolactone and ethylene carbonate are used in combination with other solvents, the carbonate-based solvent may have a vapor pressure of less than 0.1 kPa at 25 °C.

The positive electrode 113 and the negative electrode 123 may contain an additive. The additive may contain, for example, at least one of maleic anhydride, lithium bis (oxalate) borate, or biphenyl.

The separator 130 is disposed between the positive electrode structure 110 and the negative electrode structure 120. The unit cell 100 has a function of reducing a short circuit between the positive electrode structure 110 and the negative electrode structure 120. The separator 130 may be made of an insulator. The separator 130 may be made of a polymer having ductility and elasticity. For example, the separator 130 may be made of one or more materials selected from the group consisting of polyolefin, polyvinyl chloride, nylon, fluorocarbon, and polystyrene.

The positive electrode film 111 and the negative electrode film 121 are respectively sealed outside the positive electrode 113 and the negative electrode 123 in a plan view, and the positive electrode 113 and the negative electrode 123 are accommodated in respective packages made of the positive electrode film 111 and the negative electrode film 121.

Under such a premise, the package made of the positive electrode film 111 and the negative electrode film 121 has an opening 105A and an opening 105B. For example, the opening 105A may be an opening communicating with the inside and the outside of the package on the positive electrode 113 side from the separator 130. The opening 105B may be an opening communicating with the inside and the outside of the package on the negative electrode 123 side from the separator 130.

The opening 105A may be formed in the lateral side 101B provided on the opposite side of the lateral side 101A. The opening 105A may be formed at a corner formed by the lateral side 101A and the longitudinal side 102B. That is, the opening 105A may be formed at a diagonal position of the unit cell 100 with respect to the positive electrode terminal 112A. The size of the opening 105A may be 0.1 to 10 mm in the lateral direction of the unit cell 100 or may be 10 to 30 mm in the longitudinal direction of the unit cell 100.

The opening 105B may be formed in the lateral side 101B provided on the opposite side of the lateral side 101A. The opening 105B may be formed at a corner formed by the lateral side 101A and the longitudinal side 102A. That is, the opening 105B may be formed at a diagonal position of the unit cell 100 with respect to the negative electrode terminal 122A. The size of the opening 105B may be 0.1 to 10 mm in the lateral direction of the unit cell 100 or may be 10 to 30 mm in the longitudinal direction of the unit cell 100.

### Stack Cell

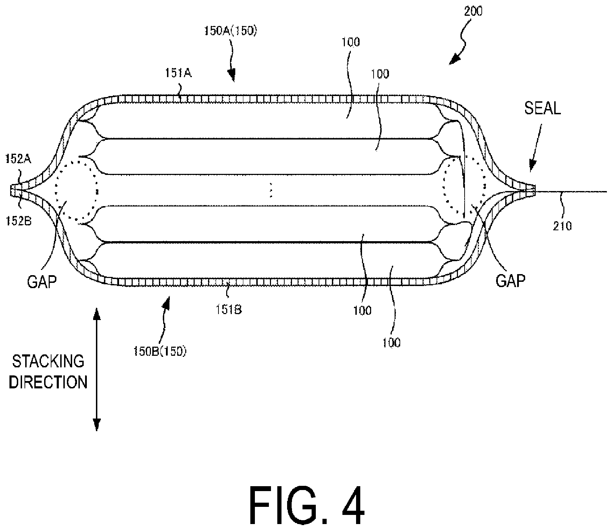

Hereinafter, a stack cell according to an embodiment will be described. FIG. 4 is a view illustrating a cross section of the stack cell 200. The stack cell 200 may be an example of the electrochemical cell.

As illustrated in FIG. 4, the stack cell 200 is a stack body in which the two or more unit cells 100 are stacked. The two or more unit cells 100 are stacked in the same direction as the stacking direction of the positive electrode structure 110, the separator 130, and the negative electrode structure 120. In other words, the stacking direction of the two or more unit cells 100 may be considered to have the same meaning as the stacking direction of the positive electrode structure 110, the separator 130, and the negative electrode structure 120. The stack body is sealed in a package 150. A gap may be formed between an inner wall of the package 150 and the stack body of the unit cells 100.

The package 150 may be made of two members (a first package member 150A and a second package member 150B) having a sheet shape. The first package member 150A has a tray shape having a first recessed portion 151A and a first flange portion 152A. The unit cells 100 are disposed in the first recessed portion 151A with a gap formed between the inner wall of the first recessed portion 151A formed in the first package member 150A and the unit cells 100. Similarly, the second package member 150B has a tray shape having a second recessed portion 151B and a second flange portion 152B. The unit cells 100 are disposed in the second recessed portion 151B with a gap formed between the inner wall of the second recessed portion 151B formed in the second package member 150B and the unit cells 100. The first flange portion 152A is formed over the entire outer periphery of the first recessed portion 151A, and the second flange portion 152B is formed over the entire outer periphery of the second recessed portion 151B. Therefore, sealing the first flange portion 152A and the second flange portion 152B allows the package 150 made of the first package member 150A and the second package member 150B to accommodate the stack body of the unit cells 100.

The package 150 may be made of an air impermeable member. The package 150 may be made of a hydrophobic member. For example, the package 150 may be made of a metal material. The metal material can use one or more materials selected from the group consisting of stainless steel, aluminum, and copper.

The positive electrode terminal 112A of the unit cell 100 is electrically connected to the positive electrode terminal 112A of another unit cell 100 (parallel connection). Similarly, the negative electrode terminal 122A of unit cell 100 is electrically connected to the negative electrode terminal 122A of another unit cell 100 (parallel connection). Finally, as the stack cell 200, a pair of extraction terminals 210 is exposed to the outside of the package 150. The pair of extraction terminals 210 may be made of the positive electrode terminal 112A and the negative electrode terminal 122A of at least one unit cell 100 included in the stack cell 200 or may be made of a member different from the positive electrode terminal 112A and the negative electrode terminal 122A of the unit cells 100.

From distinction from the package 150, the package made of the positive electrode film 111 and the negative electrode film 121 may be referred to as a first package. For the same purpose, the package 150 may be referred to as a second package.

### Method for Manufacturing Unit Cell

Hereinafter, the method for manufacturing the unit cell 100 will be described. Hereinafter, the manufacturing method will be described using the B-B cross section illustrated in FIG. 1.

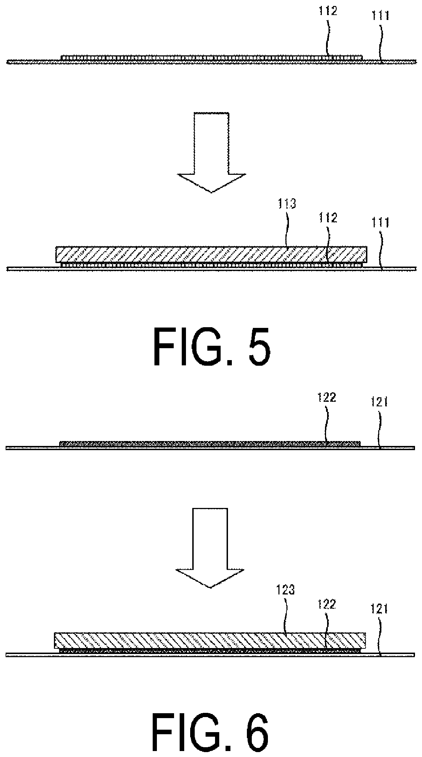

First, a method for manufacturing the positive electrode structure 110 will be described with reference to FIG. 5.

As illustrated in FIG. 5, the positive electrode current collector 112 is stacked on the positive electrode film 111. The positive electrode current collector 112 may be stacked by bonding the positive electrode current collector 112 to the positive electrode film 111. The positive electrode current collector 112 may be stacked by printing a material constituting the positive electrode current collector 112 onto the positive electrode film 111.

Subsequently, the positive electrode 113 is stacked on the positive electrode current collector 112. The positive electrode 113 may be stacked by applying a material constituting the positive electrode 113 to the positive electrode current collector 112. The positive electrode 113 may be stacked extending outward the positive electrode current collector 112 in a plan view.

Second, a method for manufacturing the negative electrode structure 120 will be described with reference to FIG. 6.

As illustrated in FIG. 6, the negative electrode current collector 122 is stacked on the negative electrode film 121. The negative electrode current collector 122 may be stacked by bonding the negative electrode current collector 122 to the negative electrode film 121. The negative electrode current collector 122 may be stacked by printing a material constituting the negative electrode current collector 122 onto the negative electrode film 121.

Subsequently, the negative electrode 123 is stacked on the negative electrode current collector 122. The negative electrode 123 may be stacked by applying a material constituting the negative electrode 123 to the negative electrode current collector 122. The negative electrode 123 may be stacked extending outward the negative electrode current collector 122 in a plan view.

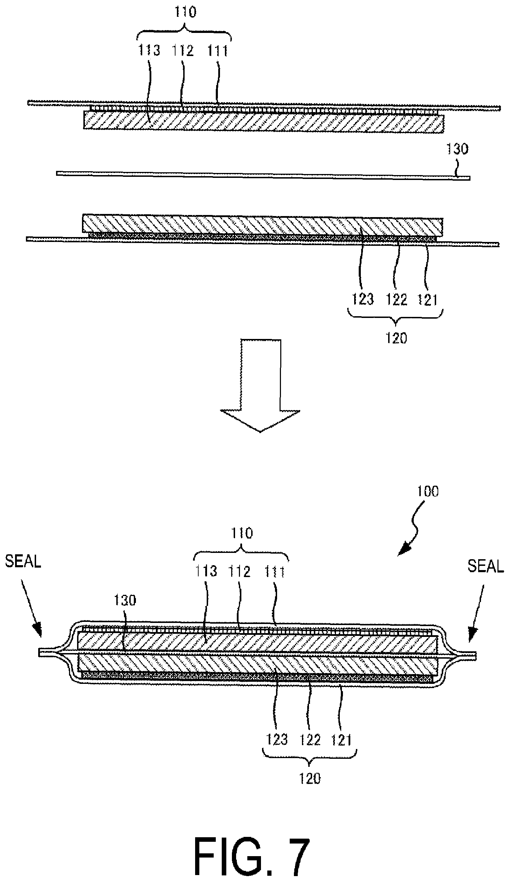

Third, an assembly process of the unit cell 100 will be described with reference to FIG. 7.

As illustrated in FIG. 7, the separator 130 is disposed between the positive electrode structure 110 and the negative electrode structure 120. The separator 130 is disposed extending outward from the outer periphery of the positive electrode structure 110 and the outer periphery of the negative electrode structure 120 in a plan view.

Subsequently, the outer periphery of the positive electrode film 111 and the outer periphery of the negative electrode film 121 are sealed. The method for sealing may be ultrasonic sealing or thermocompression bonding sealing. In a plan view, the separator 130 is sealed together with the positive electrode film 111 and the negative electrode film 121 on the inside of the outer periphery of the separator 130.

In the sealing, the outer periphery of the positive electrode film 111 and the outer periphery of the negative electrode film 121 are respectively sealed outside the positive electrode 113 and the negative electrode 123 while leaving a positive electrode non-sealing region in at least part of the positive electrode film 111.

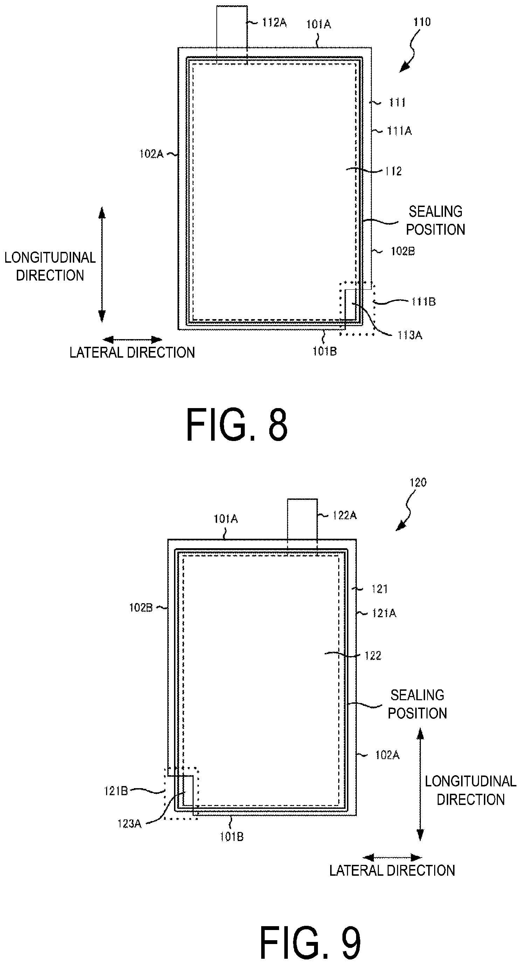

Specifically, as illustrated in FIG. 8, the outer periphery of the positive electrode film 111 includes a positive electrode sealing region 111A extending outward from the outer periphery of the positive electrode 113 and a positive electrode cutout region 111B entering an inside of the outer periphery of the positive electrode 113. The positive electrode non-sealing region is formed on the positive electrode cutout region 111B by sealing the positive electrode film 111 and the negative electrode film 121 on the positive electrode sealing region 111A and the positive electrode cutout region 111B. For example, assuming a case where the sealing position of the positive electrode film 111 and the negative electrode film 121 is linear along the lateral direction and the longitudinal direction, the positive electrode cutout region 111B enters the inside of the sealing position, the positive electrode film 111 is not present at the sealing position in the positive electrode cutout region 111B, and thus the above-described positive electrode non-sealing region is formed. That is, the positive electrode non-sealing region made of the positive electrode cutout region 111B constitutes the opening 105A described above. The positive electrode cutout region 111B may be formed at a diagonal position of the unit cell 100 (the positive electrode structure 110) with respect to the positive electrode terminal 112A. Note that the negative electrode structure 120 and the separator 130 are omitted in FIG. 8 for convenience of description. In a plan view, the sealing position may be the inside of the outer periphery of the separator 130.

Similarly, in the sealing, the outer periphery of the positive electrode film 111 and the outer periphery of the negative electrode film 121 are respectively sealed outside the positive electrode 113 and the negative electrode 123 while leaving a negative electrode non-sealing region in at least part of the negative electrode film 121.

Specifically, as illustrated in FIG. 9, the outer periphery of the negative electrode film 121 includes a negative electrode sealing region 121A extending outward from the outer periphery of the negative electrode 123 and a negative electrode cutout region 121B entering an inside of the outer periphery of the negative electrode 123. The negative electrode non-sealing region is formed on the negative electrode cutout region 121B by sealing the positive electrode film 111 and the negative electrode film 121 on the negative electrode sealing region 121A and the negative electrode cutout region 121B. For example, assuming a case where the sealing position of the positive electrode film 111 and the negative electrode film 121 is linear along the lateral direction and the longitudinal direction, the negative electrode cutout region 121B enters the inside of the sealing position, the negative electrode film 121 is not present at the sealing position in the negative electrode cutout region 121B, and thus the above-described negative electrode non-sealing region is formed. That is, the negative electrode non-sealing region made of the negative electrode cutout region 121B constitutes the opening 105B described above. The negative electrode cutout region 121B may be formed at a diagonal position of the unit cell 100 (the negative electrode structure 120) with respect to the negative electrode terminal 122A. Note that the positive electrode structure 110 is omitted in FIG. 9 for convenience of description. In a plan view, the sealing position may be the inside of the outer periphery of the separator 130.

The opening 105A and the opening 105B allow a gas generated by a side reaction of charge and discharge, particularly precharge, to be released from the inside to the outside of the unit cell 100 (the positive electrode structure 110 or the negative electrode structure 120). Therefore, a gas can be less likely to be accumulated between the positive electrode current collector 112 and the positive electrode 113, between the negative electrode current collector 122 and the negative electrode 123, between the positive electrode 113 and the separator 130, or between the negative electrode 123 and the separator 130. As a result, the efficiency of the main reaction of charge and discharge can be less likely to decrease, and the battery capacity can be less likely to decrease.

### Method for Manufacturing Stack Cell

Hereinafter, the method for manufacturing the stack cell 200 will be described. Hereinafter, the manufacturing method will be described using the A-A cross section illustrated in FIG. 1.

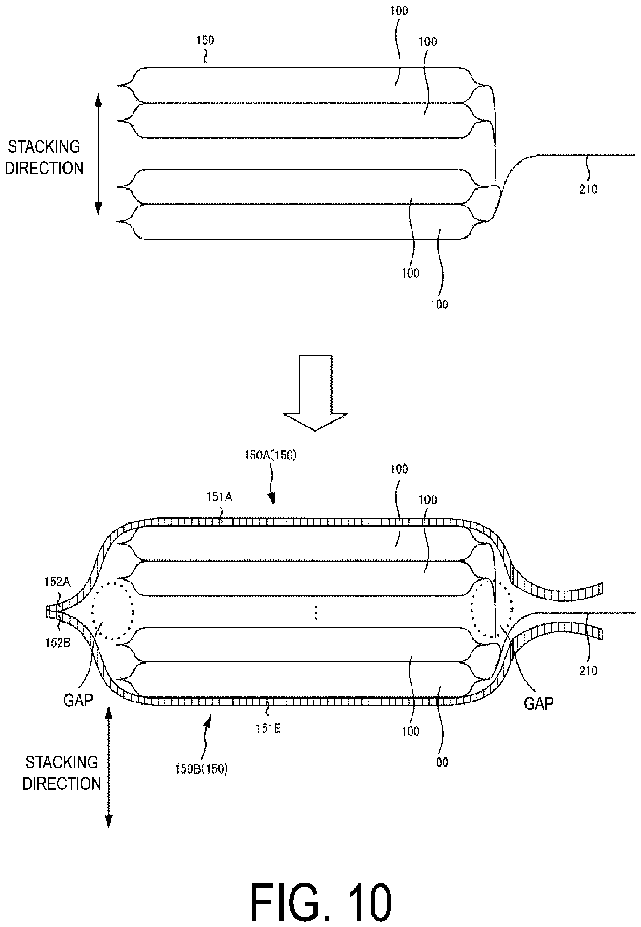

First, as illustrated in FIG. 10, the stack body of unit cells 100 is obtained by stacking the two or more unit cells 100. Subsequently, the positive electrode terminal 112A of the unit cell 100 is electrically connected to the positive electrode terminal 112A of another unit cell 100 (parallel connection). Similarly, the negative electrode terminal 122A of unit cell 100 is electrically connected to the negative electrode terminal 122A of another unit cell 100 (parallel connection).

Second, the stack body of the unit cells 100 is disposed in the package 150. For example, the unit cells 100 are disposed in the first recessed portion 151A with a gap formed between the inner wall of the first recessed portion 151A formed in the first package member 150A and the unit cells 100. The unit cells 100 are disposed in the second recessed portion 151B with a gap formed between the inner wall of the second recessed portion 151B formed in the second package member 150B and the unit cells 100. The first package member 150A in which the unit cells 100 are disposed and the second package member 150B in which the unit cells 100 are disposed are stacked. At this stage, first portions of the first package member 150A (the first flange portion 152A) and the second package member 150B (the second flange portion 152B) need not be sealed, and second portions of the first package member 150A (the first flange portion 152A) and the second package member 150B (the second flange portion 152B) may be sealed. The first portion may be a portion through which the extraction terminal 210 is extracted to the outside of the package 150. The second portion may be a portion other than the first portion.

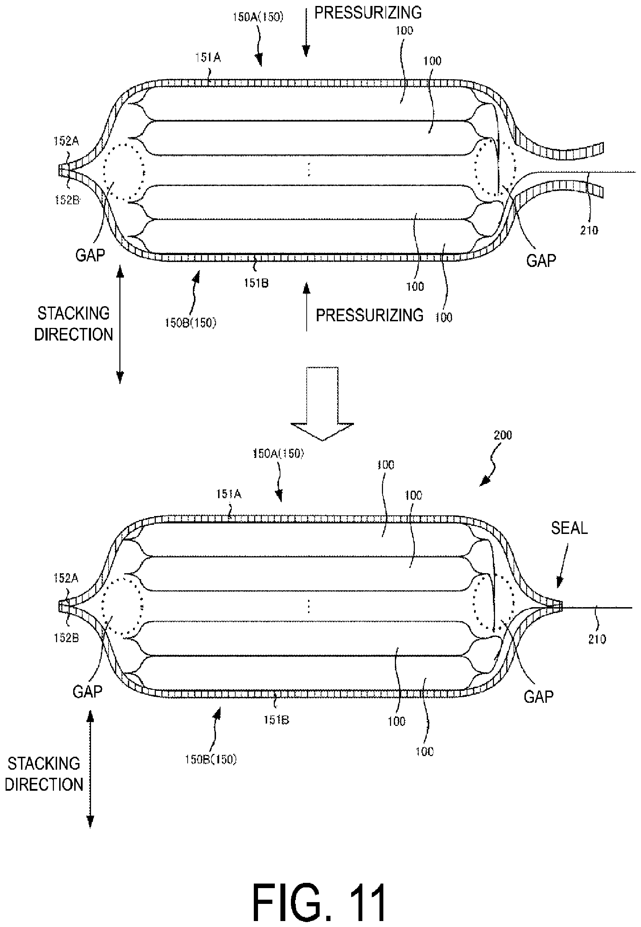

Third, as illustrated in FIG. 11, the two or more unit cells 100 are charged while the two or more unit cells 100 are pressurized in the stacking direction with the two or more unit cells 100 stacked. Such charge may be referred to as precharge. The precharge can generate a gas at the positive electrode 113 and the negative electrode 123 in the production stage of the unit cells 100 and release the gas generated at the positive electrode 113 and the negative electrode 123 in advance. The precharge may be performed under a reduced-pressure atmosphere. The reduced-pressure atmosphere may be, for example, 50 kPa or less. The reduced-pressure atmosphere may be 100 Pa or less. The reduced-pressure atmosphere may include a vacuum atmosphere. At this stage, the first portion needs not be sealed.

Fourth, the first package member 150A and the second package member 150B are entirely sealed. In other words, the first portion described above is sealed. The first portion may be a portion through which the extraction terminal 210 is extracted to the outside of the package 150.

### Summary of Manufacturing Method

Hereinafter, a summary of the manufacturing method according to an embodiment will be described.

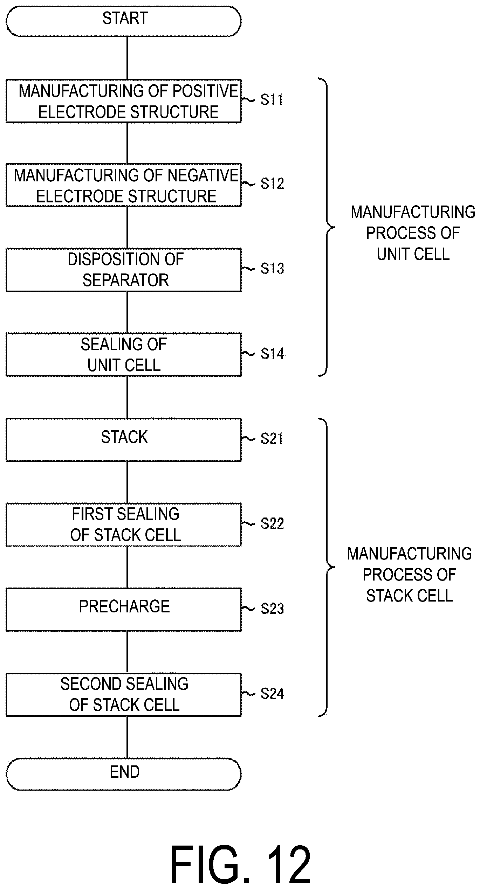

As illustrated in FIG. 12, in step S11, the positive electrode structure 110 is manufactured by stacking the positive electrode film 111, the positive electrode current collector 112, and the positive electrode 113 (see FIG. 5). Step S11 is an example of a process A.

In step S12, the negative electrode structure 120 is manufactured by stacking the negative electrode film 121, the negative electrode current collector 122, and the negative electrode 123 (see FIG. 6). Step S12 is an example of a process B.

In step S13, the separator 130 is disposed between the positive electrode structure 110 and the negative electrode structure 120 (see FIG. 7). Step S13 is an example of a process C.

In step S14, the unit cell 100 is manufactured by sealing the outer periphery of the positive electrode film 111 and the outer periphery of the negative electrode film 121 (see FIG. 7). In step S14, sealing is performed while leaving the positive electrode non-sealing region (the positive electrode cutout region 111B) in at least part of the outer periphery of the positive electrode film 111. Step S14 is an example of a process D.

Steps S11 to S14 are the processes of manufacturing the unit cell 100. In FIG. 12, step S11 is performed before step S12, but step S12 may be performed before step S11.

In step S21, the two or more unit cells 100 are stacked, and the stack body of the unit cells 100 is disposed in the package 150 (see FIG. 10).

In step S22, the second portions of the first package member 150A and the second package member 150B are sealed (see FIG. 10). The sealing of the second portions may be referred to as first sealing.

In step S23, the two or more unit cells 100 are charged while the two or more unit cells 100 are pressurized in the stacking direction of the two or more unit cells 100 (see FIG. 11). Step S23 (precharge) may be performed under a reduced-pressure atmosphere. The reduced-pressure atmosphere may include a vacuum atmosphere.

In step S24, the stack cell 200 is manufactured by sealing the first portions of the first package member 150A and the second package member 150B (see FIG. 11). The sealing of the first portions may be referred to as second sealing. The first portion may be a portion through which the extraction terminal 210 is extracted to the outside of the package 150.

That is, the precharge (step S23) is performed after the unit cells 100 are disposed in the package 150 and before the package 150 is completely sealed.

Steps S21 to S24 are the processes of manufacturing the stack cell 200. In FIG. 12, the first sealing (step S22) and the second sealing (step S24) are performed separately, but the first sealing and the second sealing may be performed simultaneously. In such a case, the first sealing and the second sealing may be performed after the precharge (step S23).

### Actions and Effects

In the embodiment, the unit cell 100 may be manufactured by sealing the outer periphery of the positive electrode film 111 and the outer periphery of the negative electrode film 123 outside the positive electrode 113 and the negative electrode 111, respectively, while leaving the positive electrode non-sealing region (e.g., the positive electrode cutout region 111B) in at least part of the outer periphery of the positive electrode film 121. Such a configuration allows the positive electrode non-sealing region (the opening 105A) to be formed as a part of the process of sealing the positive electrode film 111 and the negative electrode film 121. In particular, the positive electrode cutout region 111B is formed at a position overlapping with the sealing position, allowing the opening 105A to be easily formed. Therefore, the unit cell 100 that can release the gas that can be generated in the positive electrode 113 can be appropriately manufactured.

In the embodiment, the unit cell 100 may be manufactured by sealing the outer periphery of the positive electrode film 111 and the outer periphery of the negative electrode film 123 outside the positive electrode 113 and the negative electrode 121, respectively, while leaving the negative electrode non-sealing region (e.g., the negative electrode cutout region 121B) in at least part of the outer periphery of the negative electrode film 121. Such a configuration allows the negative electrode non-sealing region (the opening 105B) to be formed as a part of the process of sealing the positive electrode film 111 and the negative electrode film 121. In particular, the positive electrode cutout region 111B is formed at a position overlapping with the sealing position, allowing the opening 105A to be easily formed. Therefore, the unit cell 100 that can release the gas that can be generated in the negative electrode 123 can be appropriately manufactured.

In the embodiment, in the process of manufacturing the stack cell 200, a gap may be formed between the inner wall of the package 150 and the unit cells 100. Therefore, the gas that can be generated in the positive electrode 113 or the negative electrode 123 can be accommodated in the gap, allowing the accumulation of the gas at least in the unit cells 100 to be reduced.

In the embodiment, the separator 130 may extend outward the outer periphery of the positive electrode structure 110 and the outer periphery of the negative electrode structure 120 in a plan view, and the separator 130 may be sealed together with the positive electrode film 111 and the negative electrode film 121. Such a configuration allows a short circuit between the positive electrode structure 110 and the negative electrode structure 120 to be appropriately reduced.

In the embodiment, the unit cells 100 may be charged while being pressurized in the stacking direction of the positive electrode structure 110, the separator 130, and the negative electrode structure 120 (precharge). Such a configuration allows the precharge to generate a gas at the positive electrode 113 and the negative electrode 123 in the production stage of the unit cells 100 and the gas generated at the positive electrode 113 and the negative electrode 123 to be released in advance. Therefore, the gas generated in the positive electrode 113 and the negative electrode 123 can be effectively released in advance.

In an embodiment, the precharge may be performed under a reduced-pressure atmosphere. Such a configuration allows the gas generated in the positive electrode 113 and the negative electrode 123 to be efficiently released.

In the embodiment, regarding the unit cell 100, the positive electrode non-sealing region (e.g., the positive electrode cutout region 111B) may be formed. Such a configuration allows the gas generated in the positive electrode 113 to be effectively released in advance. Similarly, regarding the unit cell 100, regarding the unit cell 100, the negative electrode non-sealing region (e.g., the negative electrode cutout region 121B) may be formed. Such a configuration allows the gas generated in the negative electrode 123 to be effectively released in advance.

In the embodiment, regarding the stack cell 200, precharge may be performed with the two or more unit cells 100 stacked. Such a configuration allows precharge of the two or more unit cells 100 to be simultaneously performed and the precharge to be efficiently performed.

In the embodiment, precharge may be performed before the package 150 is completely sealed. Such a configuration, the gas generated in the positive electrode 113 and the negative electrode 123 to be efficiently released.

### Other Embodiments

Although the present invention is described by the above-described disclosure, it should not be understood that the description and the drawings, which form a part of this disclosure, limit this invention. Various alternative embodiments, examples, and operational techniques will be apparent from this disclosure to those skilled in the art.

In the disclosure described above, the case where the positive electrode structure 110 is the first structure has been exemplified. However, the disclosure described above is not limited to this example. The positive electrode structure 110 may be the second structure. In such a case, the "positive electrode" may be read as "second". Similarly, the case where the negative electrode structure 120 is the second structure has been exemplified. However, the disclosure described above is not limited to this example. The negative electrode structure 120 may be the first structure. In such a case, the "negative electrode" may be read as "first".

In the disclosure described above, the package 150 covers the stack body of the two or more unit cells 100. However, the disclosure described above is not limited to this example. The package 150 may cover one unit cell 100.

In the disclosure described above, the case where the precharge (step S23 illustrated in FIG. 12) is performed with the two or more unit cells 100 stacked has been exemplified. However, the disclosure described above is not limited to this example. For example, precharge may be performed for each unit cell 100.

In the above disclosure, the charge of the unit cells 100 is exemplified as the process for releasing the gas in the process of manufacturing the unit cells 100. However, the disclosure described above is not limited to this example. The above-described process may include discharge of the unit cells 100 in addition to charge of the unit cells 100.

In the disclosure described above, the case where the package 150 is made of the first package member 150A and the second package member 150B has been exemplified. However, the disclosure described above is not limited to this example. For example, the package 150 may have a bag shape without the second portion. In such a case, the process of sealing the second portion (S22 illustrated in FIG. 12) may be omitted.

## Claims

1. A method for manufacturing an electrochemical cell, comprising:
a process A of manufacturing a first structure by stacking a first film, a first current collector, and a first electrode;
a process B of manufacturing a second structure by stacking a second film, a second current collector, and a second electrode;
a process C of disposing a separator between the first structure and the second structure; and
a process D of manufacturing a unit cell by sealing an outer periphery of the first film and an outer periphery of the second film outside the first electrode and the second electrode, respectively, while leaving a first non-sealing region in at least part of the outer periphery of the first film.

2. The method for manufacturing an electrochemical cell according to claim 1, wherein the process D comprises a process of sealing the outer periphery of the first film and the outer periphery of the second film outside the first electrode and the second electrode, respectively, while leaving a second non-sealing region in at least part of the outer periphery of the second film.

3. The method for manufacturing an electrochemical cell according to claim 1 or 2, wherein
the outer periphery of the first film comprises a first sealing region extending outward from an outer periphery of the first electrode and a first cutout region entering an inside of the outer periphery of the first electrode in a plan view seen along a stacking direction of the first film, the first current collector, and the first electrode, and
the process D comprises a process of forming the first non-sealing region in the first cutout region by sealing the first film and the second film on the first sealing region and the first cutout region.

4. The method for manufacturing an electrochemical cell according to claim 2 or 3 depending from claim 2, wherein
the outer periphery of the second film comprises a second sealing region extending outward from an outer periphery of the second electrode and a second cutout region entering an inside of the outer periphery of the second electrode in a plan view seen along a stacking direction of the second film, the second current collector, and the second electrode, and the process D comprises a process of forming the second non-sealing region in the second cutout region by sealing the first film and the second film on the second sealing region and the second cutout region.

5. The method for manufacturing an electrochemical cell according to any one of claims 1 to 4 further comprising
a process E of manufacturing a stack cell by sealing the unit cell in a package, wherein
the process E comprises a process of forming a gap between an inner wall of the package and the unit cell.

6. The method for manufacturing an electrochemical cell according to any one of claims 1 to 5, wherein the process A comprises a process of stacking the first electrode extending outward from an outer periphery of the first current collector in a plan view seen along a stacking direction of the first film, the first current collector, and the first electrode.

7. The method for manufacturing an electrochemical cell according to any one of claims 1 to 6, wherein the process B comprises a process of stacking the second electrode extending outward from an outer periphery of the second current collector in a plan view seen along a stacking direction of the second film, the second current collector, and the second electrode.

8. The method for manufacturing an electrochemical cell according to any one of claims 1 to 7, wherein
the process C comprises a process of disposing the separator extending outward from an outer periphery of the first structure and an outer periphery of the second structure in a plan view seen along a stacking direction of the first structure, the separator, and the second structure, and
the process D comprises a process of sealing the separator together with the first film and the second film on an inside of an outer periphery of the separator in a plan view seen along the stacking direction of the first structure, the separator, and the second structure.
